# EUROPÄISCHE PATENTSCHRIFT

(11) **EP 3 290 996 B1**
(45) Veröffentlichungstag und Bekanntmachung des Hinweises auf die Patenterteilung: **02.10.2024**
(21) Anmeldenummer: 17020362.4
(22) Anmeldetag: 17.08.2017
(51) Int. Cl.: B08B 3/02, G02C 13/00, B08B 11/00, B08B 1/20, B08B 1/32

(54) **VORRICHTUNG UND VERFAHREN ZUM REINIGEN EINER LINSE**
DEVICE AND METHOD FOR CLEANING A LENSE
DISPOSITIF ET PROCÉDÉ DE NETTOYAGE D'UNE LENTILLE

(30) Priorität: 29.08.2016 DE 102016010334; 14.10.2016 DE 102016012253
(43) Veröffentlichungstag der Anmeldung: 07.03.2018
(73) Patentinhaber: Schneider GmbH & Co. KG, 35112 Fronhausen (DE)
(72) Erfinder: SCHNEIDER, Gunter, 35037 Marburg (DE); KRALL, Jürgen, 64372 Ober-Ramstadt (DE)
(74) Vertreter: Von Rohr Patentanwälte Partnerschaft mbB

(56) Entgegenhaltungen:
- EP-A1- 0 526 245
- EP-A1- 1 707 278
- EP-A2- 0 215 261
- DE-A1- 10 353 553
- DE-A1- 102004 026 523
- DE-U1- 202006 014 557
- US-A- 4 569 695
- US-A- 5 372 651

## Beschreibung

Die vorliegende Erfindung betrifft eine Vorrichtung zum Reinigen einer Linse gemäß dem Oberbegriff des Anspruchs 1 und ein Verfahren zum Reinigen einer Linse gemäß dem Oberbegriff des Anspruchs 12.

Die DE 103 53 553 A1 offenbart eine Anlage und ein Verfahren zum Abblocken von Brillengläsern, also Linsen für Brillen, wobei die Linsen nach dem Trennen von einem Blockstück mittels einer bandartigen Fördereinrichtung kontinuierlich nacheinander durch mehrere Reinigungseinrichtungen geführt bzw. gefördert werden. Die Reinigungseinrichtungen weisen getrennte Behälter und Prozessräume auf. Eine Reinigung kann durch Bürsten, Absprühen und Tauchen der Linsen erfolgen. Die Linsen werden vorzugsweise auf gitterartigen Trägern klemmend gehalten. Diese Anlage baut relativ groß und gestattet keine optimale Reinigung, insbesondere bei sehr unterschiedlichen Linsen.

Die DE 20 2006 014 557 U1 offenbart eine Anlage zur Oberflächenreinigung von optischen Bauelementen aus Glas. Die Anlage umfasst ein erstes Becken mit einem ersten Reinigungsmittel und ein zweites Becken mit einem zweiten Reinigungsmittel. Die Bauelemente aus Glas sind in einer Trägereinrichtung, wie einem Korb, positioniert und werden mittels einer Greifeinrichtung zum ersten Becken geführt, in das erste Reinigungsmittel getaucht und dort unter Verwendung von Ultraschall gereinigt. Nach Abschluss der ersten Reinigung wird die Trägereinrichtung im ersten Becken mittels der Greifeinrichtung entnommen, zum zweiten Becken geführt, in das zweite Reinigungsmittel getaucht und dort in einem weiteren Schritt gereinigt.

Die US 4,569,695 A offenbart ein Verfahren und eine Vorrichtung zum Reinigen einer Fotomaske, die bei der Herstellung von Halbleitervorrichtungen Verwendung findet. Die Vorrichtung weist mehrere Reinigungsbehälter auf, zu denen die Fotomaske zur Reinigung sukzessive einzeln transportiert wird.

Die US 5,372,651 A offenbart eine Vorrichtung und ein Verfahren zur Reinigung eines Substrats, insbesondere eines Glassubstrats zur Herstellung eines Halbleiters. Die Vorrichtung weist mehrere Reinigungsbehälter sowie ein Fördersystem zur sukzessiven Zuführung eines Glassubstrats zu den Reinigungsbehältern auf. Das Fördersystem weist zwei vertikal bewegbare Arme auf, die das Glassubstrat halten und in den jeweiligen Reinigungsbehälter führen können.

Die EP 0 526 245 A1 offenbart eine Reinigungseinrichtung für Wafer. Die Einrichtung weist mehrere Reinigungsbäder auf sowie ein Transportmittel, das die Wafer vertikal hält und jeweils einzeln von einem Bad zum nächsten transportiert.

Der vorliegenden Erfindung liegt die Aufgabe zugrunde, eine Vorrichtung und ein Verfahren zum Reinigen einer Linse anzugeben, wobei eine einfache und kompakte Bauweise und/oder eine optimierte Reinigung ermöglicht wird bzw. werden.

Die obige Aufgabe wird durch eine Vorrichtung gemäß Anspruch 1 oder durch ein Verfahren gemäß Anspruch 12 gelöst. Vorteilhafte Weiterbildungen sind Gegenstand der Unteransprüche.

Ein Aspekt liegt darin, dass insbesondere eine gemeinsame Handhabungseinrichtung für mehrere oder alle Reinigungseinrichtungen und eine optionale Beschichtungseinrichtung vorgesehen ist, die vorzugsweise eine Greifeinrichtung aufweist, um die Linse oder den Träger mit der Linse zu greifen und in die jeweilige Reinigungseinrichtung zum Reinigen bzw. in die optionale Beschichtungseinrichtung zum Beschichten zu halten. Dies ermöglicht einen vereinfachten Aufbau, da keine durchgehende, kontinuierlich fördernde Fördereinrichtung erforderlich ist. Weiter ist dies einem kompakten Aufbau zuträglich. Außerdem ermöglicht dies eine optimierte Reinigung, da die Reinigungszeit der Linsen in den jeweiligen Reinigungseinrichtungen individuell angepasst bzw. variiert werden kann.

Die Handhabungseinrichtung ist zur Zuführung des Trägers oder des Trägers mit der Linse wahlweise zu einer der Reinigungseinrichtungen ausgebildet.

Dies ist insbesondere einer optimierten Reinigung zuträglich, da in Abhängigkeit von der jeweiligen Linse bzw. den jeweiligen Linsen eine angepasste bzw. optimale Reinigungszeist zum Reinigen in den einzelnen Reinigungseinrichtungen ermöglicht wird.

Gemäß einem Aspekt der vorliegenden Erfindung ist die Handhabungseinrichtung zur individuellen Bewegung oder Zustellung der Linse oder des Trägers mit der Linse in einer oder jeder der Reinigungseinrichtungen ausgebildet. Dies ist wiederum einer optimierten, individuell angepassten Reinigung der jeweiligen Linse zuträglich.

Vorzugsweise sind die Reinigungseinrichtungen jeweils unabhängig voneinander beschickbar oder betreibbar. Dies ermöglicht eine individuelle und angepasste Reinigung der Linsen und gestattet insbesondere einen kompakten bzw. modularen, vorzugsweise leicht anpassbaren Aufbau der Reinigungsvorrichtung. Insbesondere wird also eine kontinuierliche und/oder durch alle Reinigungseinrichtungen durchlaufende Förderung der Linsen vermieden.

Insbesondere werden eine Vorrichtung und ein Verfahren zum Reinigen und optionalen Beschichten einer Linse vorgeschlagen, wobei die Linse mittels einer gemeinsamen Handhabungseinrichtung und mehreren Reinigungseinrichtungen wahlweise zuführbar und beim Reinigen linsenspezifisch positioniert bzw. bewegt.

Besonders bevorzugt wird die Linse oder ein Paar von Linsen in der Reinigungseinrichtung während eines Reinigungsschritts quer zur Zuführrichtung oszillierend oder kreisend bewegt. Dies ist einer optimierten Reinigung zuträglich.

Die Linse oder ein Paar von Linsen wird in der Reinigungseinrichtung zur Reinigung individuell in Abhängigkeit von einem Linsenparameter, wie der Linsendicke, zu einem Reinigungsorgan der jeweiligen Reinigungseinrichtung zugestellt. Dies ist wiederum einer optimierten so wie angepassten Reinigung der jeweiligen Linse zuträglich.

Besonders bevorzugt wird die Linse von oben bzw. in vertikaler Richtung insbesondere wahlweise einer von mehreren Reinigungseinrichtungen und/oder der Beschichtungseinrichtung zugeführt. Dies ermöglicht einen kompakten Aufbau und/oder eine optimierte Reinigung bzw. Beschichtung.

Vorzugsweise ist die Vorrichtung bzw. Handhabungseinrichtung CNC-gesteuert und/oder zur insbesondere lagegeregelten Positionierung der Linse oder des Trägers mit der Linse in der jeweiligen Reinigungseinrichtung bzw. Beschichtungseinrichtung ausgebildet. Dies ist einer optimierten bzw. definierten Reinigung und/oder Beschichtung zuträglich.

Unter dem Begriff "Reinigen" ist vorschlagsgemäß insbesondere ein Reinigen durch mechanische Behandlung mit einem Reinigungsorgan, wie einer Bürste, ein Reinigen durch Flüssigkeitseinwirkung, beispielsweise durch Strahlen, Spülen oder Tauchen, und/oder ein Reinigen durch Beaufschlagen mit einem Luft- oder Gasstrom, beispielsweise durch ein Gebläse und/oder zum Trocknen, zu verstehen.

Ein Reinigen der Linsen ist insbesondere für eine anschließende Beschichtung bzw. Oberflächenbehandlung bzw. -veredelung der Linsen erforderlich. Insbesondere müssen die Linsen für eine Beschichtung bzw. Oberflächenbehandlung gereinigt werden und/oder einen hohen Reinheitsgrad aufweisen, damit die Beschichtung an der Linsenoberfläche haftet bzw. keine Partikel zwischen der Linsenoberfläche und der Beschichtung eingeschlossen werden.

Vorzugsweise weist die Vorrichtung - insbesondere zusätzlich zu der Reinigungseinrichtung - mindestens eine Beschichtungseinrichtung zum Beschichten bzw. Oberflächenbehandeln der Linse auf, vorzugsweise wobei die Reinigungseinrichtung und die Beschichtungseinrichtung in einem gemeinsamen Gehäuse - insbesondere nebeneinander - angeordnet sind. Auf diese Weise können die Linsen in einer Vorrichtung gereinigt und beschichtet bzw. oberflächenbehandelt werden. Dies ist einer kompakten Bauweise zuträglich.

Besonders bevorzugt ist eine gemeinsame Handhabungseinrichtung oder sind separate Handhabungseinrichtungen für die Reinigungseinrichtung und die Beschichtungseinrichtung vorgesehen.

Einzelne der vorgenannten und nachfolgenden Aspekte und Merkmale der vorliegenden Erfindung können beliebig miteinander kombiniert, aber auch unabhängig voneinander realisiert werden.

Weitere Aspekte, Merkmale, Vorteile und Eigenschaften der vorliegenden Erfindung ergeben sich aus den Ansprüchen und der nachfolgenden Beschreibung bevorzugter Ausführungsformen anhand der Zeichnung. Es zeigt:
- Fig. 1: eine schematische schnittartige Vorderansicht einer vorschlagsgemäßen Vorrichtung gemäß einer ersten Ausführungsform;
- Fig. 2: eine Draufsicht der Vorrichtung gemäß Fig. 1;
- Fig. 3: eine schematische Ansicht eines Trägers mit einer Linse gemäß einer ersten Ausführungsform;
- Fig. 4: einen schematischen Teilschnitt von Fig. 3 entlang der Schnittlinie IV-IV;
- Fig. 5: eine schematische schnittartige Vorderansicht einer vorschlagsgemäßen Vorrichtung gemäß einer zweiten Ausführungsform;
- Fig. 6: eine schematisch Ansicht eines Trägers mit einer Linse gemäß einer zweiten Ausführungsform; und
- Fig. 7: einen schematischen Teilschnitt von Fig. 6 entlang der Schnittlinie VII-VII.

In den Figuren werden für gleiche Komponenten und Bauteile die gleichen Bezugszeichen verwendet, auch wenn eine wiederholte Beschreibung weggelassen ist.

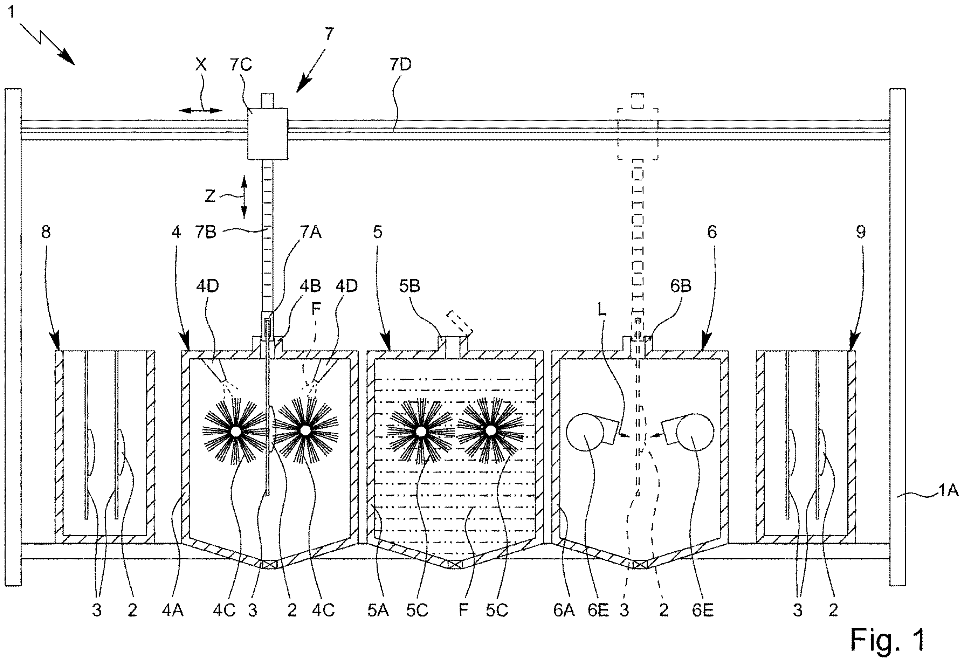

Fig. 1 zeigt in einer schematischen Vorderansicht eine vorschlagsgemäße Vorrichtung 1 zum Reinigen mindestens einer Linse 2. Vorzugsweise ist die Vorrichtung 1 derart ausgebildet, dass mehrere Linsen 2 nacheinander oder gleichzeitig gereinigt werden können.

Besonders bevorzugt handelt es sich bei der Linse 2 um ein so genanntes Brillenglas, also eine Linse für eine Brille. Dementsprechend werden die Linsen 2 vorzugsweise paarweise gereinigt. Es ist auch möglich, dass gleichzeitig mehrere Linsenpaare gereinigt werden.

Nachfolgend wird meistens nur von der Linse 2 gesprochen, auch wenn die Vorrichtung 1 gleichzeitig mehrere Linsen 2, insbesondere ein Linsenpaar oder mehrere Linsenpaare reinigt bzw. reinigen kann.

Die Linse 2 besteht vorzugsweise aus Kunststoff, kann gegebenenfalls aber auch aus Glas oder dergleichen bestehen.

Die Linse 2 weist vorzugsweise einen Durchmesser von mehreren Zentimetern, insbesondere von mehr als 3 Zentimetern auf.

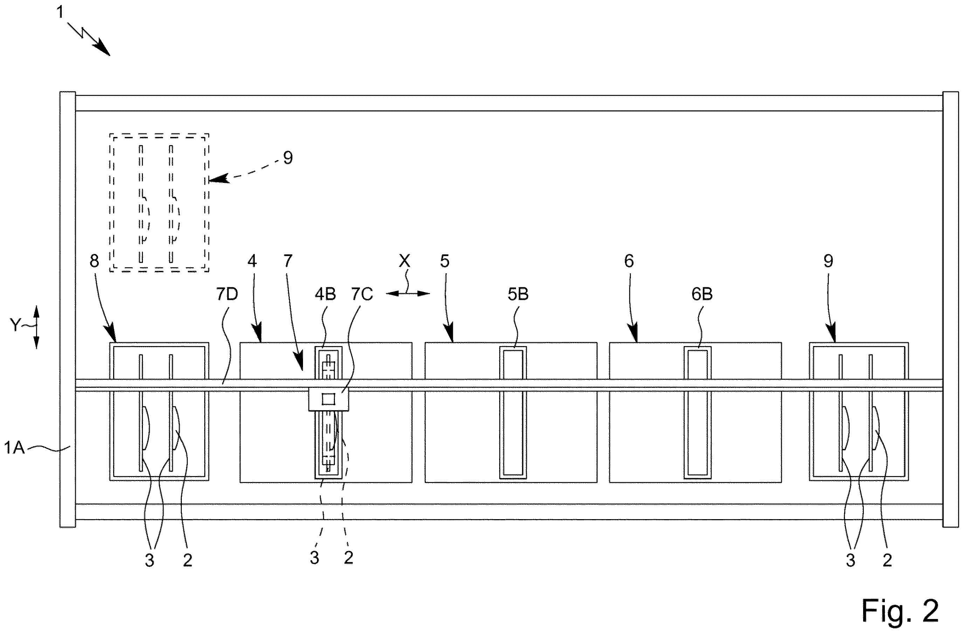

Fig. 2 zeigt die vorschlagsgemäße Vorrichtung 1 in einer schematischen Draufsicht.

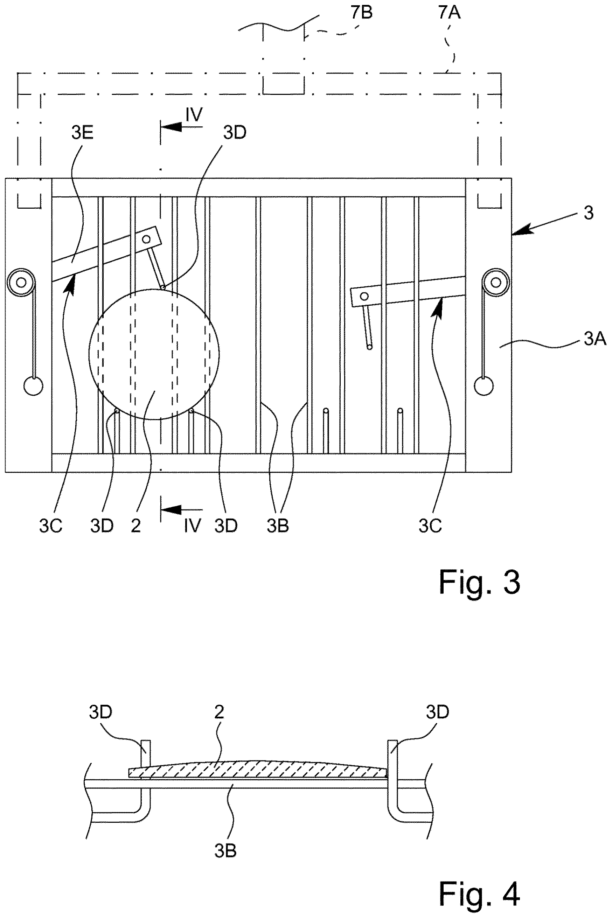

Fig. 3 zeigt in einer schematischen Ansicht einen Träger 3 mit einer davon gehaltenen Linse 2. Vorzugsweise wird die zu reinigende Linse 2 beim Reinigen von der Vorrichtung 1 direkt oder über einen Träger 3 gehalten.

Der Träger 3 ist insbesondere gitterartig oder rostartige ausgebildet.

Der Träger 3 weist vorzugsweise einen Rahmen 3A, Trägerstäbe 3B und/oder eine Halteeinrichtung 3C oder mehrere Halteeinrichtungen 3C, hier beispielsweise zwei Halteeinrichtungen 3C, auf.

Der Träger 3 ist insbesondere zur Abstützung bzw. Lagerung (insbesondere über die Trägerstäbe 3B) und/oder zur klemmenden Halterung einer Linse 2 oder mehrerer Linsen 2, besonders bevorzugt eines Paares von Linsen 2 für eine Brille, ausgebildet, wie beim Darstellungsbeispiel gezeigt. Jedoch kann der Träger 3 grundsätzlich auch zur Halterung von mehr als zwei Linsen 2 bzw. von mehreren Paaren von Linsen 2 ausgebildet sein.

Die Halteeinrichtung 3C ist vorzugweise zur klemmenden Halterung einer zugeordneten Linse 2 ausgebildet, wie auf der linken Seite in Fig. 3 angedeutet.

Vorzugsweise wird die Linse 2 am Umfang eingeklemmt bzw. gehalten. Insbesondere weist die Halteeinrichtung 3C hierzu entsprechende, hier drei, Halteabschnitte 3D auf, die am Umfang bzw. Rand der Linse 2 anlegbar sind, wie durch den Schnitt gemäß Fig. 4 entlang Schnittlinie IV-IV von Fig. 3 veranschaulicht. Insbesondere erstrecken sich die Halteabschnitte 3D quer oder senkrecht zu der Trägerebene bzw. Linsenebene 2.

Beim Darstellungsbeispiel ist vorzugsweise ein Halteabschnitt 3D einer bzw. jeder Halteeinrichtung 3C über einen Federarm 3E gegen die beiden anderen feststehenden Halteabschnitte 3D vorspannbar oder vorgespannt, um dazwischen die Linse 2 klemmend zu halten. Jedoch sind auch andere konstruktive Lösungen möglich.

Wie in Fig. 1 und 2 angedeutet, weist die Vorrichtung 1 mehrere Reinigungseinrichtungen, beim Darstellungsbeispiel drei Reinigungseinrichtungen 4, 5 und 6, auf. Diese dienen insbesondere unterschiedlichen Reinigungen bzw. weisen vorzugsweise unterschiedliche Reinigungsorgane bzw. unterschiedliche Konfigurationen von Reinigungsorganen auf. Jedoch ist es grundsätzlich auch möglich, dass Reinigungseinrichtungen der gleichen Reinigung dienen bzw. gleichartig aufgebaut bzw. ausgebildet sind bzw. mit gleichen Reinigungsorganen bestückt sind.

Die Vorrichtung 1 weist eine Handhabungseinrichtung 7 zur Zuführung der Linse 2 bzw. des Trägers 3 mit der Linse 2 zu den Reinigungseinrichtungen 4, 5, 6 auf. Insbesondere ist eine gemeinsame bzw. nur eine einzige Handhabungseinrichtung 7 vorgesehen.

Die Handhabungseinrichtung 7 ist insbesondere nur zur Beschickung jeweils einer einzigen der Reinigungseinrichtungen 4, 5, 6 mit der jeweils zu reinigenden Linse 2 bzw. den jeweils zu reinigenden Linsen 2 ausgebildet.

Insbesondere ist die Vorrichtung 1 bzw. Handhabungseinrichtung 7 zur Zuführung der Linse 2 oder des Trägers 3 mit der Linse 2 wahlweise zu einer der Reinigungseinrichtungen 4, 5, 6 ausgebildet.

Insbesondere sind die Reinigungseinrichtungen 4, 5, 6 also unabhängig voneinander mit einer oder mehreren Linsen 2 beschickbar und/oder unabhängig voneinander betreibbar.

Vorzugsweise sind einige oder alle Reinigungseinrichtungen 4, 5, 6 in einer Reihe bzw. Anordnungsrichtung, hier in horizontaler Richtung X, neben- bzw. hintereinander angeordnet, wie in Fig. 1 angedeutet.

Die Vorrichtung 1 bzw. Handhabungseinrichtung 7 ist vorzugsweise derart ausgebildet, dass die Linse 2 bzw. der Träger 3 mit der Linse 2 quer zu der Anordnungsrichtung X zuführbar ist bzw. zugeführt wird.

Insbesondere ist die Vorrichtung 1 bzw. Handhabungseinrichtung 7 derart ausgebildet, dass die Linse 2 oder der Träger 3 mit der Linse 2 zu den Reinigungseinrichtungen 4, 5, 6 wahlweise bzw. von oben bzw. in vertikaler Richtung Z zuführbar ist bzw. zugeführt wird.

Weiter ist die Vorrichtung 1 bzw. die Handhabungseinrichtung 7 vorzugsweise derart ausgewählt, dass die Linse 2 bzw. der Träger 3 mit der Linse 2 in die Anordnungsrichtung X bewegbar ist, um nacheinander bzw. in beliebiger Reihenfolge die Reinigungseinrichtungen 4, 5, 6 einzeln anfahren und beschicken zu können.

Erfindungsgemäß ist die Handhabungseinrichtung 7 derart ausgebildet, dass die Linse 2 bzw. der Träger 3 mit der Linse 2 auch quer bzw. senkrecht zu der Zuführrichtung Z und insbesondere auch quer bzw. senkrecht zu der Anordnungs- bzw. Bewegungsrichtung X in eine Querrichtung Y bewegbar ist, wie in der Draufsicht gem. Fig. 2 schematisch angedeutet.

Vorzugsweise verlaufen die X-Richtung und die Y-Richtung horizontal und/oder senkrecht zur Zuführrichtung Z.

Die Handhabungseinrichtung 7 weist vorzugsweise eine Greifeinrichtung 7A auf, um die Linse 2 oder insbesondere den Träger 3 mit der Linse 2 zu greifen und vorzugsweise zum Reinigen in die jeweilige Reinigungseinrichtung 4, 5, 6 zu halten.

Die Greifeinrichtung 7A wird vorzugsweise elektrisch, hydraulisch oder pneumatisch angetrieben, gesteuert und/oder betätigt.

Insbesondere greift die Handhabungseinrichtung 7 bzw. Greifeinrichtung 7A am Rahmen 3A des Trägers 3 an, wie in Fig. 3 schematisch angedeutet.

Die Handhabungseinrichtung 7 weist vorzugsweise einen Arm 7B auf, der die Greifeinrichtung 7A trägt und/oder in Z-Richtung verläuft bzw. bewegbar oder verschiebbar ist, wie in Fig. 1 gezeigt.

Vorzugsweise weist die Handhabungseinrichtung 7 einen Antrieb und/oder Schlitten 7C für den Arm 7B auf, um die gewünschte Bewegung, insbesondere in Z-Richtung, zu ermöglichen.

Vorzugsweise weist die Handhabungseinrichtung 7 eine Schiene 7D auf, die sich in X-Richtung bzw. die Anordnungsrichtung der Reinigungseinrichtungen 4, 5, 6 erstreckt und/oder die Greifeinrichtung 7A bzw. den Arm 7B bzw. den Schlitten 7C insbesondere motorisch verschiebbar hält bzw. führt.

Beim Darstellungsbeispiel ist bzw. sind die Greifeinrichtung 7A, der Arm 7B der Schlitten 7C und/oder die Schiene 7D vorzugsweise zusätzlich auch in die Querrichtung Y bewegbar bzw. verschiebbar, insbesondere durch eine entsprechende Führung und/oder Lagerung der Schiene 7D an einem Gestell 1A der Vorrichtung 1. Jedoch sind auch andere konstruktive Lösungen möglich.

Die entsprechenden Bewegungen bzw. Verschiebungen oder Verstellungen erfolgen insbesondere motorisch, besonders bevorzugt durch einen elektrischen, hydraulischen und/oder pneumatischen Antrieb, und/oder gesteuert, besonders bevorzugt geregelt, und/oder durch Servoantriebe.

Besonders bevorzugt erfolgt eine lagegeregelte Positionierung, insbesondere der Linse 2 bzw. des Trägers 3 mit der Linse 2 relativ zu oder innerhalb einer oder mehrerer oder aller Reinigungseinrichtungen 4, 5, 6, mittels der Handhabungseinrichtung 7.

Die Lagerregelung bzw. Positionierung erfolgt insbesondere linsenspezifisch und/oder spezifisch für die jeweilige Reinigungseinrichtung 4, 5, 6.

Beispielsweise ist die Handhabungseinrichtung 7 SPS- oder CNC-gesteuert.

Die Reinigungseinrichtungen 4, 5, 6 weisen jeweils einen eigenen bzw. abgeschlossenen Prozessraum bzw. ein eigenes Gehäuse 4A, 5A und 6A auf, wie in Fig. 1 angedeutet.

Die Prozessräume bzw. Gehäuse 4A, 5A und 6A sind vorzugsweise weitgehend geschlossen und/oder vorzugsweise nur nach oben hin offen.

Besonders bevorzugt bilden die Reinigungseinrichtungen 4, 5, 6 jeweils geschlossene bzw. abgeschlossene Prozessräume für jeweilige Flüssigkeiten F im Gegensatz zu üblichen Durchlaufreinigungen.

Die Reinigungseinrichtungen 4, 5, 6 weisen jeweils vorzugsweise eine eigene Schleuse 4B, 5B und 6B zur Aufnahme der jeweils zu reinigenden Linse 2 bzw. des Trägers 3 mit der Linse 2 auf.

Vorzugsweise ist die Schleuse 4B, 5B, 6B schlitzartig und/oder kragenartig ausgebildet, insbesondere mit einem nach oben vorspringenden Kragen oder Seitenwandabschnitt, wie in Fig. 1 angedeutet.

Die Handhabungseinrichtung 7 bzw. deren Arm 7B und/oder Greifeinrichtung 7A bzw. ein dazwischen oder daran angeordnetes Bauteil ist vorzugsweise derart ausgebildet, dass bei in die jeweilige Reinigungseinrichtung 4, 5, 6 eingefahrener Linse 2 bzw. eingefahrenem Träger 3 die Öffnung der jeweiligen Schleuse 4B, 5B, 6B möglichst weitgehend verschlossen und/oder abgedeckt wird.

Alternativ oder zusätzlich kann die Schleuse 4B, 5B, 6B auch ein Verschlusselement wie einen Deckel (gestrichelt und schematisch in Fig. 1 bei der zweiten Reinigungseinrichtung 5 bzw. deren Schleuse 5B angedeutet) aufweisen, um die jeweilige Reinigungseinrichtung 5 beispielsweise bei Nichtbenutzung und/oder bei eingefahrener Handhabungseinrichtung 7 (besser oder zusätzlich) zu verschließen.

Besonders bevorzugt erfolgt über die gleiche Öffnung bzw. Schleuse 4B, 5B, 6B sowohl eine Zuförderung der Linse 2 in die jeweilige Reinigungseinrichtung 4, 5, 6 als auch eine Wegförderung der Linse 2. Die Linse 2 wird vorzugsweise zum Hineinbewegen und Herausbewegen aus einer Reinigungseinrichtung 4, 5, 6 nur in einer einzigen Vertikalebene und/oder linear vor- und zurückbewegt. Dies gestattet einen besonders kompakten Aufbau der Vorrichtung 1, insbesondere mit besonders geringerer Grundfläche.

Die eine oder alle Reinigungseinrichtungen 4, 5, 6 bzw. deren Gehäuse 4A, 5A, 6A weisen vorzugsweise eine Öffnung oder einen Ablauf zur Erleichterung der Reinigung der jeweiligen Reinigungseinrichtung 4, 5, 6 auf. Beispielsweise kann der Deckel abnehmbar und/oder der Boden mit einem entsprechenden Ablauf versehen oder beispielsweise trichterartig ausgebildet sein, wie schematisch in Fig. 1 angedeutet.

Beim Darstellungsbeispiel ist die Reinigungseinrichtung 4 zur insbesondere mechanischen Reinigung der Linse 2 ausgebildet und/oder weist die erste Reinigungseinrichtung 4 als Reinigungsorgan vorzugsweise eine oder mehrere Bürsten 4C und/oder Düsen 4D auf.

Die Bürsten 4C sind vorzugsweise drehbar und/oder zumindest im Wesentlichen zylinderförmig ausgebildet.

Die Bürsten 4C sind vorzugsweise derart beanstandet und/oder mit paralleler Drehachse angeordnet, dass die Linse 2 insbesondere zusammen mit dem Träger 3 zwischen den beiden Bürsten 4C zum Reinigen positionierbar ist.

Die Bürsten 4C sind wahlweise mit gleicher Drehrichtung oder entgegengesetzter Drehrichtung betreibbar, bei entgegengesetzter Drehrichtung vorzugsweise derart, dass die Bürsten 4C an der Linse 2 nach unten abgleiten.

Die Bürsten 4C sind vorzugsweise motorisch, insbesondere elektrisch, hydraulisch oder pneumatisch, angetrieben.

Die Drehzahl der Bürsten 4C kann gesteuert oder geregelt sein.

Die Drehzahl der Bürsten 4C kann je nach gewünschter Reinigung oder auch linsenspezifisch bedarfsweise variiert angepasst werden.

Die Drehachsen der Bürsten 4C verlaufen insbesondere horizontal bzw. quer, besonders bevorzugt senkrecht, zu der Anordnungsrichtung X und/oder Zuführrichtung Z.

Die Bürsten 4C bzw. deren Drehachsen können derart beabstandet sein und/oder die Borsten können eine derartige Länge aufweisen, dass die Borsten der beiden Bürsten 4C zwischen den beiden Drehachsen ineinander greifen, wenn sich keine Linse 2 dazwischen befindet.

Bei Bedarf kann der Abstand der Drehachsen bzw. Bürsten 4C bzw. deren Borsten auch variieren oder anpassbar sein, beispielsweise dadurch, dass eine Bürste 4C in einer Richtung quer zur Drehachse, insbesondere in horizontaler Richtung bzw. Anordnungsrichtung X, relativ zur anderen Bürste 4C verstellbar ist. Auch hierdurch kann eine linsenspezifische Anpassung und Reinigung erreicht werden.

Die Bürsten 4C erstrecken sich vorzugsweise in axialer Richtung bzw. Y-Richtung derart, dass ein oder mehrere Linsen 2 gleichzeitig gereinigt werden können. Beim Darstellungsbeispiel kann der Träger 2 insbesondere zwei Linsen 2 tragen bzw. halten, die dann in horizontaler Richtung bzw. axialer Richtung bzw. Y-Richtung beabstandet oder versetzt zum Reinigen zwischen den Bürsten 4C positioniert bzw. gehalten werden.

Bei Bedarf kann der Abstand der Drehachsen und/oder der Abstand der Borsten der beiden Bürsten 4C und/oder die Länge der Borsten der Bürsten 4C in axialer Richtung variieren, um beispielsweise in Abhängigkeit von der axialen Position der Linse 2 an den Bürsten 4C ein unterschiedliches Reinigungsverhalten zu erreichen. So kann über die axiale Positionierung bzw. Positionierung in Y-Richtung der Linse 2 eine gewünschte Reinigung bzw. individuell variierbare bzw. linsenspezifische Reinigung erreicht werden.

Die Düsen 4D dienen insbesondere der Zuführung von Flüssigkeit F, insbesondere einer Reinigungsflüssigkeit, Wasser oder dergleichen.

Die Düsen 4D können die Flüssigkeit F auf die Reinigungsorgane bzw. Bürsten 4C und/oder direkt auf die zu reinigende Linse 2 richten bzw. abgeben, je nach Aufbau bzw. gewünschter Reinigung.

Bei der ersten Reinigungseinrichtung 4 wird die Flüssigkeit F vorzugsweise eingesprüht bzw. eingedüst. Jedoch ist auch jede sonstige Zuleitung grundsätzlich möglich.

Bei der zweiten Reinigungseinrichtung 5 wird die hier nicht dargestellte Linse 2 beispielsweise getaucht. Entsprechend ist die Flüssigkeit F zumindest teilweise in die Reinigungseinrichtung 5 bzw. deren Gehäuse 5A bzw. den davon gebildeten oder begrenzten Prozessraum eingefüllt. Dementsprechend wird ein Tauchbad gebildet, das auch ein mögliches Reinigungsorgan im Sinne der vorliegenden Erfindung bildet.

Die zweite Reinigungseinrichtung 5 weist beim Darstellungsbeispiel vorzugsweise auch ein oder mehrere Bürsten 5C, insbesondere zwei Bürsten 5C auf. Diese können wie bei der ersten Reinigungseinrichtung 4 ausgebildet sein, so dass die Erläuterungen bezüglich der Bürsten 4C entsprechend auch für die Bürsten 5C gelten. Beim Darstellungsbeispiel ist die dritte Reinigungseinrichtung 6 vorzugsweise zum Trocknen der Linse 2 ausgebildet und/oder weist die dritte Reinigungseinrichtung 6 vorzugsweise als Reinigungsorgan eine Luft- oder Gaszuführung und/oder ein Gebläse 6E auf, wie schematisch in Fig. 1 angedeutet. Insbesondere wird ein Luftstrom L von ein oder zwei Seiten auf die feuchte bzw. zu reinigende Linse 2 gerichtet, insbesondere so dass der Luftstrom L jeweils schräg nach unten auf die Linse 2 trifft. So kann beispielsweise ein Wegblasen von Flüssigkeitsresten oder sonstigen Verschmutzungen und/oder ein Trocknen der Linse 2 erfolgen, also auch ein bevorzugtes Reinigen im Sinne der vorliegenden Erfindung.

Die Reinigungseinrichtungen 4, 5, 6 sind vorzugsweise modulartig ausgebildet und/oder unabhängig voneinander betreibbar. Dementsprechend kann die Vorrichtung sehr leicht an unterschiedliche Anforderungen angepasst bzw. umgebaut werden.

Bei Bedarf können auch gleiche Module, also gleiche Reinigungseinrichtungen 4, 5 oder 6 vorgesehen werden, um beispielsweise einen gewünschten Durchsatz und/oder eine gewünschte Auswahlsicherheit zu erreichen.

Vorzugsweise können die einzelnen Reinigungseinrichtungen 4, 5, 6 je nach Bedarf und in beliebiger Reihenfolge und/oder unterschiedlich lange zum Reinigen der Linse 2 - insbesondere also linsenspezifisch - verwendet bzw. eingesetzt werden. Dies ist bei dem im Stand der Technik üblichen kontinuierlichen und seriellen Durchlauf von mehreren Reinigungseinrichtungen gerade nicht möglich.

Gemäß der vorliegenden Erfindung wird die Linse 2 oder beispielsweise ein Paar von Linsen 2 in der Reinigungseinrichtung 4, 5, 6 während der Reinigung quer zur Zuführrichtung Z und vorzugsweise auch quer zur Anordnungsrichtung X, insbesondere in Y-Richtung, bewegt.

Insbesondere kann auch eine Bewegung in der Y-Z-Ebene bzw. zwischen den beabstandeten oder parallelen Bürsten 4C oder 5C erfolgen, beispielsweise oszillierend oder kreisend.

Alternativ oder zusätzlich kann auch eine Bewegung in X-Richtung erfolgen oder überlagert werden.

Darüber hinaus ist grundsätzlich auch eine optimierte bzw. individuelle, also linsenspezifische Zustellung der Linse 2 zu einem oder mehreren Reinigungsorganen in der jeweiligen Reinigungseinrichtung 4, 5, 6 möglich, also beispielsweise eine gewünschte oder angepasste Zustellung zu einer Bürste 4C, 5C o. dgl. Dies kann beispielsweise in Abhängigkeit von der Linsengröße oder Linsendicke und/oder aufgrund sonstiger Parameter erfolgen.

Vorschlagsgemäß ist daher insbesondere im Gegensatz zu der herkömmlichen kontinuierlichen Förderung durch mehrere Reinigungseinrichtungen nun eine individuelle bzw. linsenspezifische Reinigung der Einzellinse 2 oder einer Gruppe von Linsen 2, beispielsweise eines Paares von Linsen 2, möglich, insbesondere durch Variation oder Anpassung der Reinigungszeit, der Positionierung und Zustellung und/oder einer Bewegung während der Reinigung.

Eine "individuelle" bzw. "linsenspezifische" Reinigung bedeutet im Sinne der vorliegenden Erfindung insbesondere, dass die Reinigung in der jeweiligen Reinigungseinrichtung 4, 5, 6 unabhängig von der Reinigung in einer anderen Reinigungseinrichtung 4, 5, 6 für die jeweilige Linse 2 oder Gruppe von Linsen 2 und/oder unabhängig von der Reinigung anderer Linsen optimiert oder angepasst werden kann. Dies ist mit der vorschlagsgemäßen Vorrichtung 1 und dem vorschlagsgemäßen Verfahren sehr leicht möglich und insbesondere vorgesehen.

Insbesondere ergeben sich verschiedene Parameter und Bewegungsmöglichkeiten zur individuellen bzw. optimalen Anpassung der Bewegung der Linse 2 relativ zu einem oder mehreren Reinigungsorganen während der Reinigung. Beispielsweise kann eine lineare oder nicht-lineare Bewegung bzw. Oszillationsbewegung gewählt werden. Weiter kann die Geschwindigkeit und/oder Bewegungsfrequenz bzw. Oszillationsfrequenz angepasst oder variiert werden. Weiter können vorzugsweise alle drei Raumrichtungen X, Y, Z beliebig kombiniert und benutzt werden, um die Linse 2 relativ zu den jeweiligen Reinigungsorganen während der Reinigung zu positionieren und/oder zu bewegen.

Vorzugsweise ist eine einzige gemeinsame Handhabungseinrichtung 7 für alle Reinigungseinrichtungen 4, 5, 6 der Vorrichtung 1 vorgesehen.

Insbesondere hält bzw. positioniert die Handhabungseinrichtung 7 die zu reinigende(n) Linse(n) 2 jeweils auch während des Reinigens, also bei jedem Reinigungsschritt bzw. in jeder Reinigungseinrichtung 4, 5, 6.

Grundsätzlich ist es aber auch möglich, dass die Handhabungseinrichtung 7 eine Reinigungseinrichtung 4, 5, 6 mit einer Linse 2 bzw. einem Träger 3 beschickt und während der Reinigung in dieser Reinigungseinrichtung 4, 5, 6 eine andere Linse 2 bzw. einen anderen Träger 3 einer anderen Reinigungseinrichtung 4, 5, 6 zuführt bzw. in dieser ablegt. Dies kann beispielsweise für einzelne bestimmte Reinigungseinrichtungen 4, 5, 6 vorgesehen sein, bei denen die Linse 2 während der Reinigung nicht bewegt wird. Insbesondere kann hierzu beispielsweise der Träger 3 am Gehäuse 4A, 5A, 6A der jeweiligen Reinigungseinrichtung 4, 5, 6 eingehängt oder in sonstiger Weise, insbesondere definiert, aufgenommen bzw. gehalten werden.

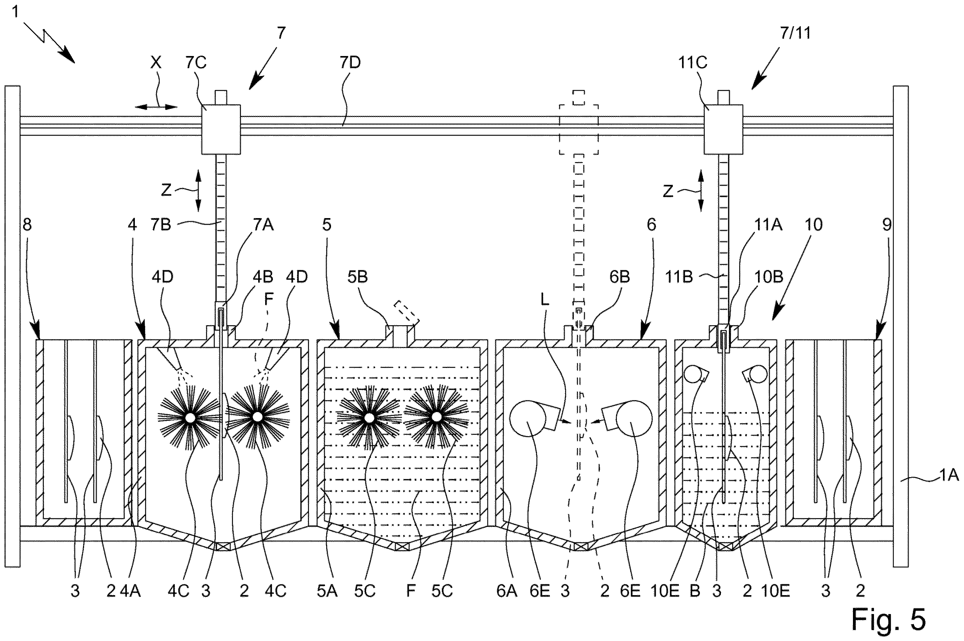

Alternativ oder zusätzlich können optional auch mehrere Handhabungseinrichtungen 7, insbesondere zwei Handhabungseinrichtungen 7 eingesetzt werden, wie im Folgenden noch näher anhand von Fig. 5 erläutert wird. Dies kann insbesondere bei mehr als zwei, drei oder vier Reinigungseinrichtungen 4, 5, 6 und/oder bei einer Bestückung der Vorrichtung 1 mit weiteren Einrichtungen sinnvoll sein, um eine gute Auslastung der Reinigungseinrichtungen 4, 5, 6 und damit eine gute Auslastung bzw. einen guten Durchsatz der Vorrichtung 1 zu erreichen.

Die Vorrichtung 1 weist vorzugsweise eine Einrichtung zum Zwischenspeichern von zu reinigenden Linsen 2 bzw. ein oder mehreren Trägern 3 mit zu reinigenden Linsen 2 und/oder für gereinigte Linsen 2 bzw. ein oder mehreren Trägern 3 mit gereinigten Linsen 2 auf.

Die Einrichtung zur Zwischenlagerung kann insbesondere ein Magazin 8 und/oder zwei oder mehr Magazine 8, 9 umfassen, wie in Fig. 1 beispielhaft angedeutet.

Beispielsweise ist das Magazin 8 zur Aufnahme bzw. Halterung oder Bereitstellung von mehreren Trägern 3 mit zu reinigenden und/oder gereinigten Linsen 2 ausgebildet.

Vorzugsweise ist das Magazin 8 modulartig, kistenartig und/oder nach oben hin offen ausgebildet, so dass die Träger 3 für die Handhabungseinrichtung 7 zugänglich sind.

Es ist es möglich, dass die Vorrichtung 1 bzw. Handhabungseinrichtung 7 die Träger 3 mit zu reinigenden Linsen 2 nacheinander dem Magazin 8 entnimmt und diese nach dem Reinigen wieder in demselben Magazin 8 ablegt oder an das andere, optionale Magazin 9 abgibt.

Beim Darstellungsbeispiel ist das Magazin 8 mit zu reinigenden Linsen 2 beispielsweise auf einer Seite der Vorrichtung 1 bzw. des Gestells 1A und das Magazin 9 mit gereinigten Linsen 2 auf einer anderen bzw. entgegengesetzte Seite der Vorrichtung 1 bzw. des Gestells 1A angeordnet.

Jedoch kann beispielsweise das zweite Magazin 9 bzw. das Magazin 9 mit den bereits gereinigten Linsen 2 auch auf der gleichen Seite wie das erste Magazin 8 bzw. neben dem Magazin 8 mit den zu reinigenden Linsen 2 angeordnet sein, wie beispielhaft gestrichelt in Fig. 2 angedeutet. Hier ist das Magazin 9 in Y-Richtung bzw. Querrichtung gegenüber dem Magazin 8 versetzt. Jedoch kann das Magazin 9 beispielsweise auch in Reihe bzw. in Anordnungsrichtung X oder Verlängerung der Reinigungseinrichtungen 4, 5, 6 neben dem ersten Magazin 8 angeordnet sein.

Wenn die Vorrichtung 1 bzw. Handhabungseinrichtung 7 die gereinigten Linsen 2 wieder in dasselbe Magazin 8, 9 ablegt, aus dem die Linse 2 zuvor entnommen wurde, kann die Vorrichtung 1 aber auch mit zwei oder mehr Magazinen 8, 9 arbeiten. Wenn ein Magazin 8 abgearbeitet ist, kann dann das nächste Magazin 9 abgearbeitet werden. So wird ebenfalls ein möglichst kontinuierlicher Betrieb der Vorrichtung 1 bzw. ein hoher Durchsatz ermöglicht.

Das Magazin 8, 9 ist vorzugsweise manuell oder automatisiert zuführbar, entnehmbar und/oder wechselbar.

Die Vorrichtung 1 bzw. deren Gestell 1A weist vorzugsweise ein gemeinsames Gehäuse (nicht dargestellt) auf bzw. bildet ein solches, das die wesentlichen Komponenten, insbesondere die Reinigungseinrichtungen 4, 5, 6 oder sonstige Einrichtungen, die Handhabungseinrichtung 7 und optional auch das Magazin 8 bzw. die Magazine 8, 9, umgibt. Das Magazin 8, 9 ist dann vorzugsweise über eine entsprechende, nicht dargestellte Schleuse, Öffnung, Tür o. dgl. zuführbar, entnehmbar bzw. wechselbar. Jedoch sind auch andere konstruktive Lösungen möglich.

Die Einrichtung zum Zwischenspeichern von Linsen 2 bzw. Trägern 3 mit Linsen 2 kann anstelle eines Magazins 8 oder mehrerer Magazine 8, 9 auch beispielsweise nur einen Beladebereich o. dgl. umfassen.

Der Beladebereich ist dann vorzugsweise innerhalb des Gehäuses und/oder des Arbeitsbereichs der Handhabungseinrichtung 7 vorgesehen.

Im Folgenden soll eine weitere, besonders bevorzugte Ausführungsform der Vorrichtung 1 anhand von Fig. 5 bis Fig. 7 näher erläutert werden.

Die Vorrichtung 1 gemäß der zweiten Ausführungsform ist vorzugsweise grundsätzlich wie die anhand von Fig. 1 bis Fig. 4 beschriebene Vorrichtung 1 ausgebildet. Insbesondere weist die im Folgenden beschriebene Vorrichtung 1 ein, mehrere oder alle Merkmale der zuvor beschriebenen Vorrichtung 1 auf, so dass die vorherigen Erläuterungen entsprechend gelten.

Fig. 1 zeigt in einer schematischen Vorderansicht die vorschlagsgemäße Vorrichtung 1 gemäß der zweiten Ausführungsform.

Gemäß der in Fig. 1 dargestellten Ausführungsform ist die Vorrichtung 1 vorzugsweise sowohl zum Reinigen als auch zum (anschließenden) Beschichten mindestens einer Linse 2 ausgebildet.

Vorzugsweise weist die Vorrichtung 1 - insbesondere zusätzlich zu den Reinigungseinrichtungen 4, 5 und 6 - mindestens eine Beschichtungseinrichtung 10 auf, vorzugsweise wobei die Beschichtungseinrichtung 10 zum Beschichten, insbesondere Hartbeschichten, bzw. zur Oberflächenbehandlung bzw. -veredelung der Linse 2 ausgebildet ist.

Unter dem Begriff "Beschichtung" im Sinne der vorliegenden Erfindung ist vorzugsweise eine Oberflächenbehandlung bzw. -veredelung der Linse 2 durch Auftragen von dünnen Schichten auf die Linsenoberfläche zu verstehen, insbesondere um Eigenschaften der Linsen, wie die Transmission, Reflexion, Absorption, die mechanische Belastbarkeit, die thermische Beständigkeit und/oder die chemische Resistenz, zu verändern bzw. zu beeinflussen. Beispielsweise kann eine Linse durch eine entsprechende Beschichtung gehärtet und/oder verspiegelt oder entspiegelt werden und/oder mit einem Filter versehen werden.

Die Beschichtungseinrichtung 10 und die Reinigungseinrichtungen 4, 5, 6 sind vorzugsweise in einem gemeinsamen Gehäuse der Vorrichtung 1 - insbesondere nebeneinander - angeordnet.

Die Beschichtungseinrichtung 10 weist vorzugsweise einen eigenen bzw. abgeschlossenen Prozess- bzw. Reaktionsraum bzw. ein eigenes Gehäuse 10A und/oder eine eigene Schleuse 10B zur Aufnahme der zu beschichtenden, vorzugsweise bereits gereinigten Linse 2 bzw. des Trägers 3 mit der zu beschichtenden bzw. gereinigten Linse 2 auf, wie in Fig. 5 angedeutet.

Bei der dargestellten Ausführungsform ist die Beschichtungseinrichtung 10 vorzugsweise als Tauchbad ausgebildet und/oder dazu ausgebildet, die Linse 2 im Tauchverfahren zu beschichten.

Besonders bevorzugt ist die Beschichtungseinrichtung 10, insbesondere das Gehäuse 10A bzw. der Prozessraum, zumindest teilweise mit einem Beschichtungsmittel B gefüllt oder füllbar, insbesondere derart, dass die Linse 2 zur Beschichtung in das Beschichtungsmittel B getaucht werden kann. Hier sind jedoch auch andere konstruktive Lösungen bzw. Verfahrensvarianten möglich, insbesondere bei denen die Beschichtung bzw. das Beschichtungsmittel B durch chemische oder physikalische Glasphasenabscheidung, insbesondere durch Aufdampfen, erzeugt bzw. aufgetragen werden kann. Insbesondere kann das Beschichtungsmittel B flüssig, gasförmig oder dampfförmig vorliegen oder aufgetragen werden.

Bei der dargestellten Ausführungsform weist die Beschichtungseinrichtung 10 vorzugsweise ein - insbesondere integriertes bzw. im Gehäuse 10A angeordnetes - Gebläse 10E auf, besonders bevorzugt um die Linse 2 unmittelbar bzw. direkt nach Beschichtung bzw. Entnahme aus dem Tauchbad zu trocknen. Auf diese Weise wird eine besonders kompakte Bauweise der Beschichtungseinrichtung 10 und somit der Vorrichtung 1 ermöglicht. Hier sind jedoch auch andere Lösungen möglich, insbesondere bei denen die dritte Reinigungseinrichtung 6 und/oder eine weitere, nicht dargestellte Trocknungseinrichtung zum Trocknen der mit dem Beschichtungsmittel B bzw. mittels der Beschichtungseinrichtung 10 beschichteten Linse 2 vorgesehen ist bzw. verwendet wird.

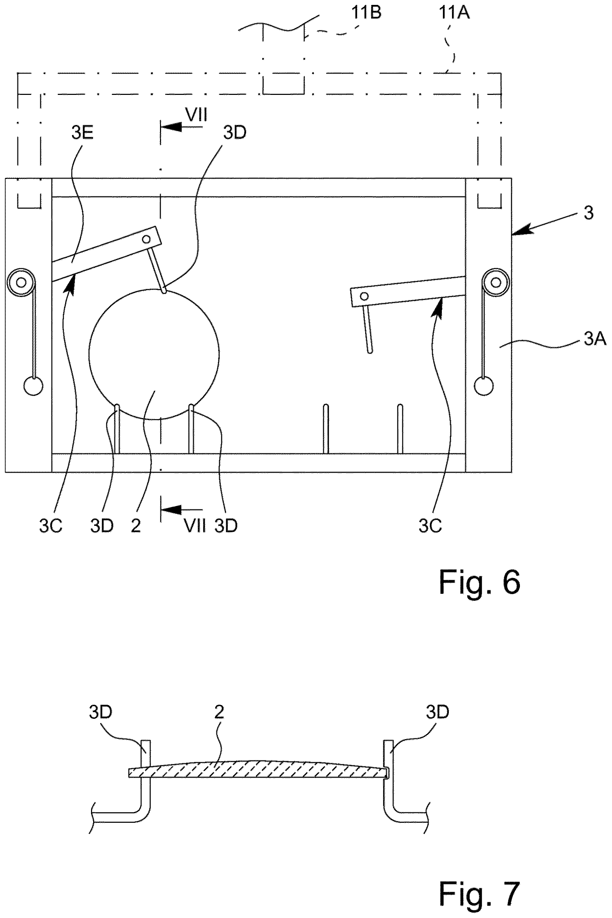

Fig. 6 zeigt in einer schematischen Ansicht den Träger 3 gemäß einer für die Beschichtung optimierten Ausführungsform.

Gemäß der dargestellten Ausführungsform ist der Träger 3 vorzugsweise zum seitlichen bzw. radialen Halten der Linse 2 oder mehrerer Linsen 2, besonders bevorzugt eines Paares von Linsen 2 für eine Brille, ausgebildet, insbesondere derart, dass die Flachseiten bzw. die Vorderseite und Rückseite der Linse 2 frei bzw. unverdeckt sind, eine Beschichtung dieser folglich nicht durch etwaige Bauteile, wie die Trägerstäbe 3B gemäß Fig. 3 und Fig. 4, beeinträchtigt wird.

Insbesondere ist der Träger 3 dazu ausgebildet, eine flachseitige Beschichtung der Linse 2 zu ermöglichen bzw. die Linse 2 flachseitig für eine Beschichtung vollständig bzw. vollflächig zu exponieren. Besonders bevorzugt wird dies durch seitliches bzw. radiales Halten bzw. Einklemmen der Linse 2 mittels der Halteinrichtung 3C bzw. den Halteabschnitten 3D ermöglicht, wie bereits im Zusammenhang mit Fig. 3 und Fig. 4 erläutert.

Bei der in Fig. 5 dargestellten Ausführungsform weist die Vorrichtung 1 vorzugsweise eine zusätzliche bzw. zweite Handhabungseinrichtung 11 zur Handhabung der Linse 2 bzw. des Trägers 3 mit der Linse 2 auf, insbesondere um die Linse 2 bzw. den Träger 3 der Beschichtungseinrichtung 10 zuzuführen.

Vorzugsweise ist die erste Handhabungseinrichtung 7 zur Handhabung der Linse 2 bzw. des Trägers 3 während der bzw. für die Reinigung und die zweite Handhabungseinrichtung 11 zur Handhabung der Linse 2 bzw. des Trägers 3 während der bzw. für die Beschichtung vorgesehen.

Besonders bevorzugt wird die Linse 2 nach der Reinigung bzw. die gereinigte Linse 2 bzw. der Träger 3 mit der gereinigten Linse 2 nach der Reinigung von der zweiten Handhabungseinrichtung 11 aufgenommen bzw. gegriffen, insbesondere in einer der Reinigungseinrichtungen 4, 5 und 6 und/oder in dem Magazin 8, 9 der zweiten Handhabungseinrichtung 11 übergeben, um die Linse 2 mittels der zweiten Handhabungseinrichtung 11 der Beschichtungseinrichtung 10 zuzuführen und zu beschichten. Auf diese Weise kann bereits während der Beschichtung der Linse 2 eine weitere Linse 2 der Reinigungseinrichtung 4, 5 oder 6 mittels der ersten Handhabungseinrichtung 7 zugeführt bzw. in der Reinigungseinrichtung 4, 5 oder 6 gereinigt werden.

Vorzugsweise weisen die Handhabungseinrichtungen 7, 11 eine gemeinsame Schiene 7D auf, die sich in X-Richtung bzw. die Anordnungsrichtung der Reinigungseinrichtungen 4, 5, 6 und der Beschichtungseinrichtung 10 erstreckt und/oder die Greifeinrichtungen 7A, 11A bzw. die Arme 7B, 11B bzw. die Schlitten 7C, 11C insbesondere motorisch verschiebbar hält bzw. führt. Hier sind jedoch auch andere Lösungen möglich, insbesondere bei denen die zweite Handhabungseinrichtung 11 einen separaten Schlitten (nicht dargestellt) aufweist.

Es sind jedoch auch konstruktive Lösungen möglich, bei denen eine einzige bzw. gemeinsame Handhabungseinrichtung 7 für alle Reinigungseinrichtungen 4, 5, 6 der Vorrichtung 1 und die Beschichtungseinrichtung 10 vorgesehen ist.

Für die Aufnahme bzw. Halterung, Bereitstellung und/oder Zwischenlagerung der beschichteten Linsen 2 ist vorzugsweise ein weiteres bzw. drittes Magazin (nicht dargestellt) vorgesehen. Es ist jedoch auch möglich, die beschichteten Linsen 2 im ersten Magazin 8 bzw. zweiten Magazin 9 aufzubewahren bzw. zwischenzulagern.

Es werden eine Vorrichtung 1 und ein Verfahren zum Reinigen und optionalen Beschichten einer Linse 2 vorgeschlagen, wobei die Linse 2 mittels einer gemeinsamen Handhabungseinrichtung 7 oder mehrerer Handhabungseinrichtungen 7, 11 mehreren Reinigungseinrichtungen 4, 5 und 6 und einer optionalen Beschichtungseinrichtung 10 wahlweise zuführbar ist bzw. zugeführt wird.

Besonders bevorzugt wird bei dem vorschlagsgemäßen Verfahren in einem gemeinsamen Gehäuse einer Vorrichtung 1 die Linse 2 zunächst - vorzugsweise mechanisch bzw. mittels einer Bürste 4C, 5C und/oder mittels einer oder mehrerer Reinigungseinrichtungen 4, 5 bzw. 6 - gereinigt und anschließend - vorzugsweise in einer Beschichtungseinrichtung 10 bzw. mittels eines Beschichtungsmittels B - beschichtet, vorzugsweise wobei während der Beschichtung der Linse 2 eine weitere Linse 2 der Reinigungseinrichtung 4, 5 bzw. 6 zugeführt und/oder in der Reinigungseinrichtung 4, 5 bzw. 6 gereinigt wird. Vorzugsweise werden dabei zwei separate Handhabungseinrichtungen 7, 11 eingesetzt, insbesondere wobei eine erste Handhabungseinrichtung 7 die Linse 2 für die Reinigung und eine zweite Handhabungseinrichtung 11 die Linse 2 für die Beschichtung handhabt.

Einzelne Aspekte und Merkmale der vorliegenden Erfindung können grundsätzlich auch unabhängig voneinander, insbesondere aber auch in beliebiger Kombination realisiert werden.

### Bezugszeichenliste:

- 1: Vorrichtung
- 1A: Gestell
- 2: Linse
- 3: Träger
- 3A: Rahmen
- 3B: Trägerstab
- 3C: Halteeinrichtung
- 3D: Halteabschnitt
- 3E: Federarm
- 4: erste Reinigungseinrichtung
- 4A: Gehäuse
- 4B: Schleuse
- 4C: Bürste
- 4D: Düse
- 5: zweite Reinigungseinrichtung
- 5A: Gehäuse
- 5B: Schleuse
- 5C: Bürste
- 6: dritte Reinigungseinrichtung
- 6A: Gehäuse
- 6B: Schleuse
- 6C: Bürste
- 6E: Gebläse
- 7: erste Handhabungseinrichtung
- 7A: Greifeinrichtung
- 7B: Arm
- 7C: Schlitten
- 7D: Schiene
- 8: erstes Magazin
- 9: zweites Magazin
- 10: Beschichtungseinrichtung
- 10A: Gehäuse
- 10B: Schleuse
- 10E: Gebläse
- 11: zweite Handhabungseinrichtung
- 11A: Greifeinrichtung
- 11B: Arm
- 11C: Schlitten

- B: Beschichtungsmittel
- F: Flüssigkeit
- L: Luftstrom

## Patentansprüche

1. Vorrichtung (1) zum Reinigen mindestens einer Linse (2), mit mehreren Reinigungseinrichtungen (4, 5, 6), welche jeweils einen eigenen abgeschlossenen Prozessraum aufweisen, und mit einer Handhabungseinrichtung (7) zur Zuführung der Linse (2) bzw. eines Trägers (3) mit der Linse (2) zu den Reinigungseinrichtungen (4, 5, 6),
**dadurch gekennzeichnet,**
**dass** die Handhabungseinrichtung (7) zur Bewegung oder Zustellung der Linse (2) oder des Trägers (3) mit der Linse (2) quer zur Zuführrichtung (Z) in einer oder jeder der Reinigungseinrichtungen (4, 5, 6) ausgebildet ist.

2. Vorrichtung nach Anspruch 1, **dadurch gekennzeichnet, dass** die Handhabungseinrichtung (7) zur Zuführung der Linse (2) oder des Trägers mit der Linse (2) wahlweise zu einer der Reinigungseinrichtungen (4, 5, 6) ausgebildet ist und/oder dass die Reinigungseinrichtungen (4, 5, 6) unabhängig voneinander beschickbar oder betreibbar sind.

3. Vorrichtung nach Anspruch 1 oder 2, **dadurch gekennzeichnet, dass** die Handhabungseinrichtung (7) eine Greifeinrichtung (7A) aufweist, um die Linse (2) oder den Träger (3) mit der Linse (2) zu greifen und in die jeweilige Reinigungseinrichtung (4, 5, 6) zu halten.

4. Vorrichtung nach einem der voranstehenden Ansprüche, **dadurch gekennzeichnet, dass** die Reinigungseinrichtungen (4, 5, 6) jeweils ein eigenes Gehäuse (4A, 5A, 6A) aufweisen, und/oder dass die Reinigungseinrichtungen (4, 5, 6) jeweils eine eigene Schleuse (4B, 5B, 6B) zur Aufnahme der Linse (2) oder des Trägers (3) mit der Linse (2) aufweisen, und/oder dass die Reinigungseinrichtungen (4, 5, 6) modulartig ausgebildet und/oder nebeneinander angeordnet sind.

5. Vorrichtung nach einem der voranstehenden Ansprüche, **dadurch gekennzeichnet, dass** die Handhabungseinrichtung (7) zur Bewegung oder Zustellung der Linse (2) oder des Trägers (3) mit der Linse (2) individuell in Abhängigkeit von einem Linsenparameter in einer oder jeder der Reinigungseinrichtungen (4, 5, 6) ausgebildet ist.

6. Vorrichtung nach einem der voranstehenden Ansprüche, **dadurch gekennzeichnet, dass** die Reinigungseinrichtungen (4, 5, 6) in einer Richtung (X) neben- oder hintereinander angeordnet sind und die Handhabungseinrichtung (7) zur Zuführung der Linse (2) oder des Trägers (3) mit der Linse (2) quer zu dieser Richtung (X) ausgebildet ist, und/oder
dass die Handhabungseinrichtung (7) zur Zuführung der Linse (2) oder des Trägers (3) mit der Linse (2) zu den Reinigungseinrichtungen (4, 5, 6) von oben bzw. in vertikaler Richtung (Z) ausgebildet ist.

7. Vorrichtung nach einem der voranstehenden Ansprüche, **dadurch gekennzeichnet, dass** die Handhabungseinrichtung (7) zur lagegeregelten Positionierung der Linse (2) oder des Trägers (3) mit der Linse (2) in den Reinigungseinrichtungen (4, 5, 6) ausgebildet ist.

8. Vorrichtung nach einem der voranstehenden Ansprüche, **dadurch gekennzeichnet, dass** die Handhabungseinrichtung (7) einen Arm (7B), der vorzugsweise in vertikaler Richtung (Z) verstellbar oder bewegbar ist, und/oder einen Schlitten (7C), der vorzugsweise in horizontaler Richtung (X) insbesondere längs einer Schiene (7D) verstellbar oder bewegbar ist, aufweist, um die Linse (2) oder den Träger (3) mit der Linse (2) in die entsprechende Richtung (X, Z) bewegen zu können, und/oder dass die Handhabungseinrichtung (7) zur dreiachsigen Bewegung der Linse (2) oder des Träger (3) mit der Linse (2) ausgebildet ist.

9. Vorrichtung nach einem der voranstehenden Ansprüche, **dadurch gekennzeichnet, dass** mindestens eine Reinigungseinrichtung (4, 5) als Reinigungsorgan eine oder mehrere Bürsten (4C, 5C) aufweist.

10. Vorrichtung nach einem der voranstehenden Ansprüche, **dadurch gekennzeichnet, dass** die Vorrichtung (1) mindestens eine Beschichtungseinrichtung (10) zum Beschichten der Linse (2) aufweist, vorzugsweise wobei die Reinigungseinrichtungen (4, 5, 6) und die Beschichtungseinrichtung (10) in einem gemeinsamen Gehäuse - insbesondere nebeneinander - angeordnet sind und/oder wobei die - insbesondere gemeinsame - Handhabungseinrichtung (7) oder eine zweite Handhabungseinrichtung (11) zur Zuführung der Linse (2) bzw. eines Trägers (3) mit der Linse (2) zu der Beschichtungseinrichtung (10) vorgesehen ist.

11. Vorrichtung nach einem der voranstehenden Ansprüche, **dadurch gekennzeichnet, dass** die Vorrichtung (1) ein vorzugsweise wechselbares Magazin (8, 9) für ungereinigte und/oder gereinigte und/oder beschichtete Linsen (2) bzw. Träger (3) mit Linsen (2) aufweist.

12. Verfahren zum Reinigen einer Linse (2) mittels einer Vorrichtung (1) mit mindestens einer Reinigungseinrichtung (4, 5, 6),
**dadurch gekennzeichnet,**
**dass** die Linse (2) oder ein Paar von Linsen (2) in der Reinigungseinrichtung (4, 5, 6) während eines Reinigungsschritts quer zur Zuführrichtung (Z) bewegt wird, und/oder
**dass** die Linse (2) oder ein Paar von Linsen (2) in der Reinigungseinrichtung (4, 5, 6) zur Reinigung individuell in Abhängigkeit von einem Linsenparameter zu einem Reinigungsorgan zugestellt wird.

13. Verfahren nach Anspruch 12, **dadurch gekennzeichnet, dass** die Linse (2) verschiedenen Reinigungseinrichtungen (4, 5, 6) und/oder einer Beschichtungseinrichtung (11) mittels einer gemeinsamen Handhabungseinrichtung (7) zugeführt wird und/oder dass die Linse (2) verschiedenen Reinigungseinrichtungen (4, 5, 6) mittels einer ersten Handhabungseinrichtung (7) und einer Beschichtungseinrichtung (10) mittels einer zweite Handhabungseinrichtung (11) zugeführt wird.

14. Verfahren nach Anspruch 12 oder 13, **dadurch gekennzeichnet,**
**dass** die Linse (2) von oben bzw. in vertikaler Richtung (Z) insbesondere wahlweise einer von mehreren Reinigungseinrichtungen (4, 5, 6) zugeführt wird, und/oder
**dass** die Linse (2) quer zu einer Richtung (X), in der mehrere Reinigungseinrichtungen (4, 5, 6) hintereinander angeordnet sind, diesen Reinigungseinrichtungen (4, 5, 6) zugeführt wird.

15. Verfahren nach einem der Ansprüche 12 bis 14, **dadurch gekennzeichnet, dass** die Linse (2) in der Reinigungseinrichtung (4, 5, 6) - vorzugsweise mechanisch bzw. mittels einer Bürste (4C, 5C) - gereinigt und anschließend in einer Beschichtungseinrichtung (10) beschichtet wird, vorzugsweise wobei während der Beschichtung der Linse (2) eine weitere Linse (2) der Reinigungseinrichtung (4, 5, 6) zugeführt und/oder in der Reinigungseinrichtung (4, 5, 6) gereinigt wird.

## Claims

1. Apparatus (1) for cleaning at least one lens (2), with a plurality of cleaning devices (4, 5, 6), each of which has its own enclosed processing space, and with a handling device (7) for feeding the lens (2) and/or a carrier (3) with the lens (2) to the cleaning devices (4, 5, 6),
**characterized**
**in that** the handling device (7) is designed to move or advance the lens (2) or the carrier (3) with the lens (2) transversely to the feed direction (Z) in one or each of the cleaning devices (4, 5, 6).

2. Apparatus according to claim 1, **characterized in that** the handling device (7) is designed for feeding the lens (2) or the carrier with the lens (2) selectively to one of the cleaning devices (4, 5, 6) and/or **in that** the cleaning devices (4, 5, 6) can be loaded or operated independently of one another.

3. Apparatus according to claim 1 or 2, **characterized in that** the handling device (7) comprises a gripping device (7A) for gripping the lens (2) or the carrier (3) with the lens (2) and holding it in the respective cleaning device (4, 5, 6).

4. Apparatus according to one of the preceding claims, **characterized in that** the cleaning devices (4, 5, 6) each have their own housing (4A, 5A, 6A), and/or **in that** the cleaning devices (4, 5, 6) each have their own port (4B, 5B, 6B) for receiving the lens (2) or the carrier (3) with the lens (2), and/or **in that** the cleaning devices (4, 5, 6) have a module-like design and/or are arranged next to one another.

5. Apparatus according to one of the preceding claims, **characterized in that** the handling device (7) is designed to move or advance the lens (2) or the carrier (3) with the lens (2) individually depending on a lens parameter in one or each of the cleaning devices (4, 5, 6).

6. Apparatus according to one of the preceding claims, **characterized in that** the cleaning devices (4, 5, 6) are arranged next to or behind one another in one direction (X) and the handling device (7) is designed to feed the lens (2) or the carrier (3) with the lens (2) transversely to this direction (X), and/or
**in that** the handling device (7) is designed to feed the lens (2) or the carrier (3) with the lens (2) to the cleaning devices (4, 5, 6) from above and/or in the vertical direction (Z).

7. Apparatus according to one of the preceding claims, **characterized in that** the handling device (7) is designed for position-controlled positioning of the lens (2) or the carrier (3) with the lens (2) in the cleaning devices (4, 5, 6).

8. Apparatus according to one of the preceding claims, **characterized in that** the handling device (7) has an arm (7B), which is preferably adjustable or movable in the vertical direction (Z), and/or a carriage (7C), which is preferably adjustable or movable in the horizontal direction (X), in particular along a rail (7D), in order to be able to move the lens (2) or the carrier (3) with the lens (2) in the corresponding direction (X, Z), and/or **in that** the handling device (7) is designed for triaxial movement of the lens (2) or the carrier (3) with the lens (2).

9. Apparatus according to one of the preceding claims, **characterized in that** at least one cleaning device (4, 5) has one or more brushes (4C, 5C) as cleaning member.

10. Apparatus according to one of the preceding claims, **characterized in that** the apparatus (1) has at least one coating device (10) for coating the lens (2), preferably wherein the cleaning devices (4, 5, 6) and the coating device (10) are arranged in a common housing - in particular next to one another - and/or wherein the - in particular common - handling device (7) or a second handling device (11) is provided for feeding the lens (2) and/or a carrier (3) with the lens (2) to the coating device (10).

11. Apparatus according to one of the preceding claims, **characterized in that** the apparatus (1) comprises a preferably exchangeable magazine (8, 9) for uncleaned and/or cleaned and/or coated lenses (2) and/or carriers (3) with lenses (2).

12. Method for cleaning a lens (2) by means of an apparatus (1) with at least one cleaning device (4, 5, 6),
**characterized**
**in that** the lens (2) or a pair of lenses (2) in the cleaning device (4, 5, 6) is moved transversely to the feed direction (Z) during a cleaning step, and/or
**in that** the lens (2) or a pair of lenses (2) in the cleaning device (4, 5, 6) is advanced for cleaning to a cleaning member individually depending on a lens parameter.

13. Method according to claim 12, **characterized in that** the lens (2) is fed to different cleaning devices (4, 5, 6) and/or a coating device (11) by means of a common handling device (7) and/or **in that** the lens (2) is fed to different cleaning devices (4, 5, 6) by means of a first handling device (7) and to a coating device (10) by means of a second handling device (11).

14. Method according to claim 12 or 13, **characterized**
**in that** the lens (2) is fed from above and/or in the vertical direction (Z) in particular selectively to one of a plurality of cleaning devices (4, 5, 6), and/or
**in that** the lens (2) is fed transversely to a direction (X), in which a plurality of cleaning devices (4, 5, 6) are arranged one behind the other, to these cleaning devices (4, 5, 6).

15. Method according to one of claims 12 to 14, **characterized in that** the lens (2) is cleaned in the cleaning device (4, 5, 6) - preferably mechanically and/or by means of a brush (4C, 5C) - and then coated in a coating device (10), preferably wherein during the coating of the lens (2) a further lens (2) is fed to the cleaning device (4, 5, 6) and/or is cleaned in the cleaning device (4, 5, 6).

## Revendications

1. Appareil (1) de nettoyage d'au moins une lentille (2), avec plusieurs dispositifs de nettoyage (4, 5, 6), lesquels présentent respectivement un espace de traitement fermé propre, et avec un dispositif de manipulation (7) destiné à amener la lentille (2) ou un support (3) avec la lentille (2) aux dispositifs de nettoyage (4, 5, 6),
**caractérisé**
**en ce que** le dispositif de manipulation (7) est réalisé pour déplacer ou rapprocher la lentille (2) ou le support (3) avec la lentille (2) de manière transversale à la direction d'amenée (Z) dans un ou chacun des dispositifs de nettoyage (4, 5, 6).

2. Appareil selon la revendication 1, **caractérisé en ce que** le dispositif de manipulation (7) est réalisé pour amener la lentille (2) ou le support avec la lentille (2) au choix à un des dispositifs de nettoyage (4, 5, 6), et/ou **en ce que** les dispositifs de nettoyage (4, 5, 6) peuvent être chargés ou peuvent fonctionner indépendamment les uns des autres.

3. Appareil selon la revendication 1 ou 2, **caractérisé en ce que** le dispositif de manipulation (7) présente un dispositif de préhension (7A) pour saisir la lentille (2) ou le support (3) avec la lentille (2) et pour la maintenir dans le dispositif de nettoyage (4, 5, 6) respectif.

4. Appareil selon l'une quelconque des revendications précédentes, **caractérisé en ce que** les dispositifs de nettoyage (4, 5, 6) présentent respectivement un boîtier propre (4A, 5A, 6A), et/ou **en ce que** les dispositifs de nettoyage (4, 5, 6) présentent respectivement un sas (4B, 5B, 6B) propre destiné à recevoir la lentille (2) ou le support (3) avec la lentille (2), et/ou **en ce que** les dispositifs de nettoyage (4, 5, 6) sont réalisés de manière modulaire et/ou sont disposés côte à côte.

5. Appareil selon l'une quelconque des revendications précédentes, **caractérisé en ce que** le dispositif de manipulation (7) est réalisé pour déplacer ou rapprocher la lentille (2) ou le support (3) avec la lentille (2) individuellement en fonction d'un paramètre de lentille dans un ou chacun des dispositifs de nettoyage (4, 5, 6).

6. Appareil selon l'une quelconque des revendications précédentes, **caractérisé en ce que** les dispositifs de nettoyage (4, 5, 6) sont disposés côte à côte ou les uns derrière les autres dans une direction (X) et le dispositif de manipulation (7) est réalisé pour amener la lentille (2) ou le support (3) avec la lentille (2) de manière transversale à ladite direction (X), et/ou
**en ce que** le dispositif de manipulation (7) est réalisé pour amener la lentille (2) ou le support (3) avec la lentille (2) aux dispositifs de nettoyage (4, 5, 6) depuis le haut et/ou dans une direction verticale (Z).

7. Appareil selon l'une quelconque des revendications précédentes, **caractérisé en ce que** le dispositif de manipulation (7) est réalisé pour positionner de manière régulée en position la lentille (2) ou le support (3) avec la lentille (2) dans les dispositifs de nettoyage (4, 5, 6).

8. Appareil selon l'une quelconque des revendications précédentes, **caractérisé en ce que** le dispositif de manipulation (7) présente un bras (7B), qui peut être ajusté ou peut être déplacé de préférence dans une direction verticale (Z), et/ou un chariot (7C), qui peut être ajusté ou déplacé de préférence dans une direction horizontale (X) en particulier le long d'un rail (7D), pour pouvoir déplacer la lentille (2) ou le support (3) avec la lentille (2) dans la direction (X, Z) correspondante, et/ou **en ce que** le dispositif de manipulation (7) est réalisé pour déplacer le long de trois axes la lentille (2) ou le support (3) avec la lentille (2).

9. Appareil selon l'une quelconque des revendications précédentes, **caractérisé en ce qu'**au moins un dispositif de nettoyage (4, 5) présente en tant qu'organe de nettoyage une ou plusieurs brosses (4C, 5C).

10. Appareil selon l'une quelconque des revendications précédentes, **caractérisé en ce que** l'appareil (1) présente au moins un dispositif de revêtement (10) destiné à revêtir la lentille (2), de préférence dans lequel les dispositifs de nettoyage (4, 5, 6) et le dispositif de revêtement (10) sont disposés dans un boîtier commun - en particulier côte à côte -, et/ou dans lequel le dispositif de manipulation (7) - en particulier commun - ou un deuxième dispositif de manipulation (11) est prévu pour amener la lentille (2) ou un support (3) avec la lentille (2) au dispositif de revêtement (10).

11. Appareil selon l'une quelconque des revendications précédentes, **caractérisé en ce que** l'appareil (1) présente un magasin (8, 9) de préférence interchangeable pour des lentilles (2) non nettoyées et/ou nettoyées et/ou revêtues et/ou des supports (3) avec des lentilles (2).

12. Procédé de nettoyage d'une lentille (2) au moyen d'un appareil (1) avec au moins un dispositif de nettoyage (4, 5, 6),
**caractérisé**
**en ce que** la lentille (2) ou une paire de lentilles (2) est déplacée dans le dispositif de nettoyage (4, 5, 6) pendant une étape de nettoyage de manière transversale à la direction d'amenée (Z), et/ou
**en ce que** la lentille (2) ou une paire de lentilles (2) est rapprochée à un organe de nettoyage dans le dispositif de nettoyage (4, 5, 6) pour le nettoyage individuellement en fonction d'un paramètre de lentille.

13. Procédé selon la revendication 12, **caractérisé en ce que** la lentille (2) est amenée à différents dispositifs de nettoyage (4, 5, 6) et/ou à un dispositif de revêtement (11) au moyen d'un dispositif de manipulation (7) commun, et/ou **en ce que** la lentille (2) est amenée à différents dispositifs de nettoyage (4, 5, 6) au moyen d'un premier dispositif de manipulation (7) et à un dispositif de revêtement (10) au moyen d'un deuxième dispositif de manipulation (11).

14. Procédé selon la revendication 12 ou 13, **caractérisé**
**en ce que** la lentille (2) est amenée en particulier au choix à un de plusieurs dispositifs de nettoyage (4, 5, 6) depuis le haut et/ou dans une direction verticale (Z), et/ou
**en ce que** la lentille (2) est amenée auxdits dispositifs de nettoyage (4, 5, 6) de manière transversale à une direction (X), dans laquelle plusieurs dispositifs de nettoyage (4, 5, 6) sont disposés les uns derrière les autres.

15. Procédé selon l'une quelconque des revendications 12 à 14, **caractérisé en ce que** la lentille (2) est nettoyée dans le dispositif de nettoyage (4, 5, 6) - de préférence mécaniquement ou au moyen d'une brosse (4C, 5C) - puis est revêtue dans un dispositif de revêtement (10), dans lequel de préférence une autre lentille (2) est amenée au dispositif de nettoyage (4, 5, 6) et/ou est nettoyée dans le dispositif de nettoyage (4, 5, 6) pendant le revêtement de la lentille (2).
